# EUROPEAN PATENT SPECIFICATION

(11) **EP 3 513 952 B1**
(45) Date of publication and mention of the grant of the patent: **16.09.2020**
(21) Application number: 18162774.6
(22) Date of filing: 20.03.2018
(51) Int. Cl.: B29C 64/379, B33Y 30/00, B33Y 40/00

(54) **THREE-DIMENSIONAL PRINTING SYSTEM**
SYSTEM ZUM DREIDIMENSIONALEN DRUCKEN
SYSTÈME D'IMPRESSION TRIDIMENSIONNELLE

(30) Priority: 17.01.2018 CN 201810044298
(43) Date of publication of application: 24.07.2019
(73) Proprietor: XYZprinting, Inc., New Taipei City 22201 (TW); Kinpo Electronics, Inc., New Taipei City 22201 (TW)
(72) Inventor: CHIU, Yi-Min, New Taipei City 22201 (TW); LEE, Yang-Teh, New Taipei City 22201 (TW)
(74) Representative: 2K Patentanwälte Blasberg Kewitz & Reichel

(56) References cited:
- WO-A1-2016/088042
- CN-A- 107 081 909
- CN-U- 206 884 176

## Description

### BACKGROUND OF THE INVENTION

### 1. Technical field

The technical field relates to a printing platform structure and, in particular, to a three-dimensional printing system.

### 2. Description of Related Art

Three-dimensional (3D) printing is one of quick formation techniques. As a movable platform moves a work carrier, metal powders or plastic powders are deposited layer by layer and fused together to build up a 3D object by additive manufacturing techniques. Toy parts, mechanical parts or artificial human bones can be made by 3D printing, so 3D printing is growing rapidly in popularity with the consuming public.

However, the 3D object is formed through additive manufacturing techniques, so the object printed out is adhered to the work carrier. Then, a shovel is manually operated to take the object from the work carrier. As a result, if without manual labor to take down objects, mass production cannot be accomplished. Therefore, industries endeavor to create a solution to automatically print out a 3D object without the need of manually taking down the printed objects by a shovel.

CN 206 884 176 U relates to the field of additive manufacturing (also known as 3D printing technology), and particularly provides an additive molding device capable of automatically removing a molded workpiece, which includes a material tray, a wire feeding device, a printing device, a three-axis movement device, a conveying device, a vacuum adsorption table and a collecting device. There are printing wires entering the printing device through the wire feeding device to realize fuse deposition printing. The three-axis movement device drives the printing device to realize three-axis movement. The vacuum adsorption table is fixed between the conveyor belts and is used to adsorb the conveyor belts located on the upper part. The collecting device is arranged in front of the conveying device, and is used for receiving the shaped workpiece conveyed from the conveying device. The additive forming equipment capable of automatically removing the molded workpiece can realize the automatic removal of the molded workpiece, and can also realize the adsorption and release of the conveyor belt through the vacuum adsorption method, which improves the stability of the equipment and the quality of the printed workpiece.

WO 2016/088042 A1 discloses an automated additive manufacturing system which may include a conveyable build sheet. A part removal device may be positioned in proximity to a surface of the build sheet to facilitate separating a part composite from the build sheet. The build sheet may include a turn or fold at which a part composite can be detached from the build sheet. A conveyor including a part composite can be moved through a solvent area having a solvent that is configured to dissolve or separate a support material from a model material in a part composite. A sorting device can be configured to identify characteristics of different part composites, and in response, direct selected ones of the parts to different receiving areas in the system. The system may include a drying device to dry a part composite using an airflow.

CN 107 081 909 A discloses a 3D printer comprising a supporting frame, a longitudinal sliding rail which is arranged on the supporting frame, a transverse sliding rail which is connected with the longitudinal sliding rail in a movable mode, a printing head used for printing which is arranged on the transverse sliding rail in a movable mode, and a driving device which is arranged on the support to control the printing head to move in the plane with the transverse sliding rail and the longitudinal sliding rail. A conveying belt is connected with the lower portion of the supporting frame; the position of the plane with the transverse sliding rail and the longitudinal sliding rail corresponds to the position of the conveying belt; and the printing head faces the upper end face of the conveying belt; and the driving device is connected with the conveying belt. According to the 3D printer, continuous printing is achieved, and moreover the forming size is not limited.

In view of the above, the inventor studied various technologies and created an effective solution in the present disclosure.

### SUMMARY OF THE INVENTION

The present disclosure provides a three-dimensional printing system. With a height level difference, a belt is inclined after an abutment portion. This configuration causes an object to be gradually detached from the belt. Accordingly, the need for manually operating a shovel to take down the objects is eliminated, and automatic three-dimensional printing production is achieved.

In one embodiment, a three-dimensional printing system is provided for printing out an object. The three-dimensional printing system includes like prior art systems: a support plate; a delivery module including a belt covering the support plate, the belt including a printing area above the support plate and including a separation section at one side of the support plate; at least one printing device disposed corresponding to the support plate, the object being formed layer by layer in the printing area via the printing device and being moved with the belt; Further, according to the invention, the system includes an object detaching member disposed under the belt and between the support plate and the separation section, the object detaching member including an abutment portion abutted against the belt, the abutment portion being at a position higher than a position of the separation section to form a height level difference between the abutment portion and the separation section, so that the object is detached from the belt when the object is moved to the separation section, wherein the object detaching member is an extending plate extended from one side of the support plate, and the abutment portion is formed at one end of the extending plate at one side adjacent to the separation section.

After the object is completely printed out in the printing area, the object adhered to the belt is moved by the belt to the inclined section. The belt is horizontal before the abutment portion, and is inclined after the abutment portion due to the height level difference. This configuration enables the object to be gradually detached from the belt, so that the object is separated from the belt when the object is moved to the separation section. As a result, the object can be successfully collected by a material collecting track to achieve automatic production.

According to a length of the printing area of the delivery module, one or multiple printing devices can be arranged. Therefore, the multiple printing devices can produce objects at the same time. The multiple objects printed out are then collected sequentially, thus achieving mass production and saving production time.

### BRIEF DESCRIPTION OF THE DRAWINGS

The disclosure will become more fully understood from the detailed description and the drawings given herein below for illustration only, and thus does not limit the disclosure, wherein:
FIG. 1 is a perspective assembled view illustrating a three-dimensional printing system according to the first embodiment of the present disclosure;
FIG. 2 is a cross-sectional view illustrating the three-dimensional printing system according to the first embodiment of the present disclosure;
FIG. 3 is a partial enlarged view illustrating the three-dimensional printing system according to the first embodiment of the present disclosure;
FIG. 4 is another partial enlarged view illustrating the three-dimensional printing system according to the first embodiment of the present disclosure;
FIG. 5 is a first in-use view illustrating the three-dimensional printing system according to the first embodiment of the present disclosure;
FIG. 6 is a second in-use view illustrating the three-dimensional printing system according to the first embodiment of the present disclosure;
FIG. 7 is a third in-use view illustrating the three-dimensional printing system according to the first embodiment of the present disclosure;
FIG. 8 is a schematic in-use view illustrating the three-dimensional printing system according to the second not claimed embodiment of the present disclosure;
FIG. 9 is a partial enlarged view illustrating the three-dimensional printing system according to the second not claimed embodiment of the present disclosure; and
FIG. 10 is a cross-sectional view illustrating the three-dimensional printing system according to the third embodiment of the present disclosure.

### DETAILED DESCRIPTION OF THE INVENTION

Detailed descriptions and technical contents of the present disclosure are illustrated below in conjunction with the accompanying drawings. However, it is to be understood that the descriptions and the accompanying drawings disclosed herein are merely illustrative and exemplary and not intended to limit the scope of the present disclosure.

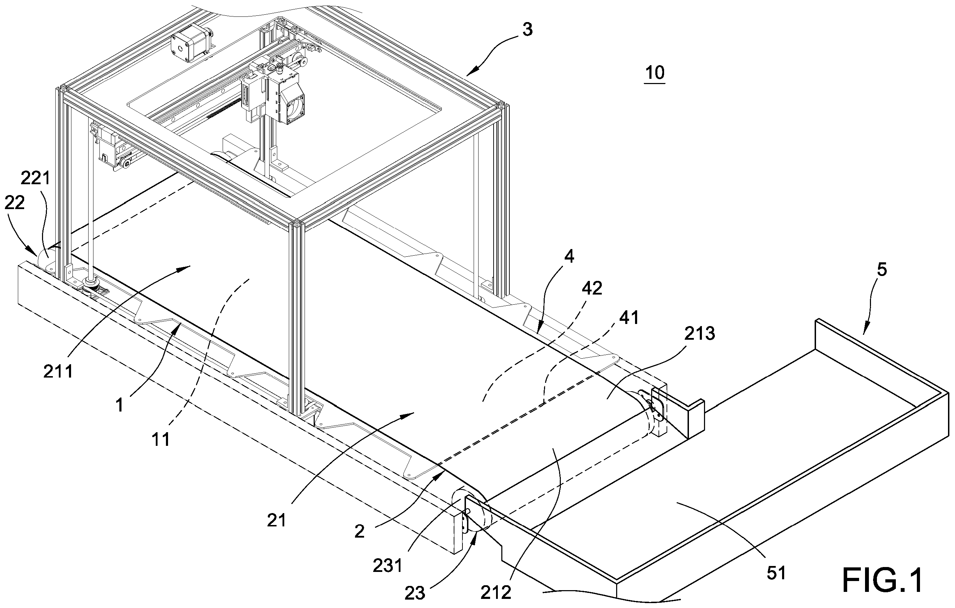

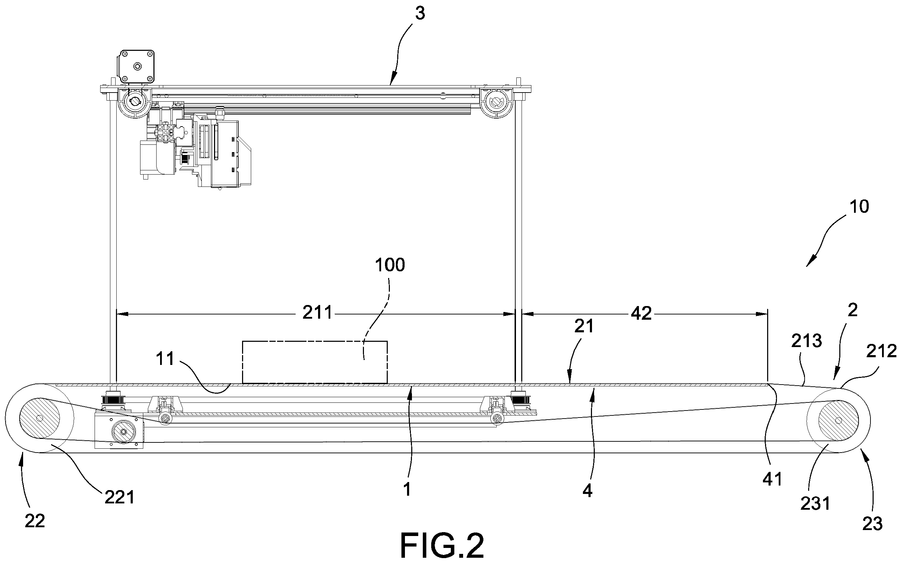

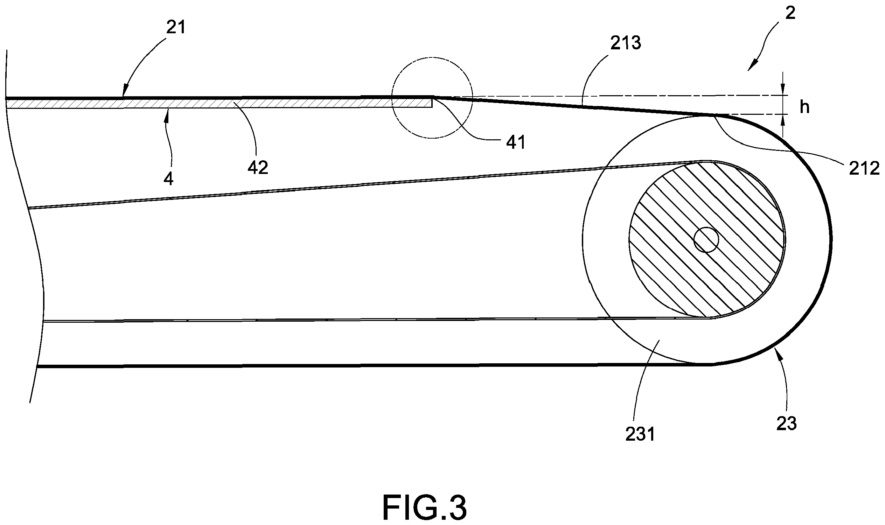

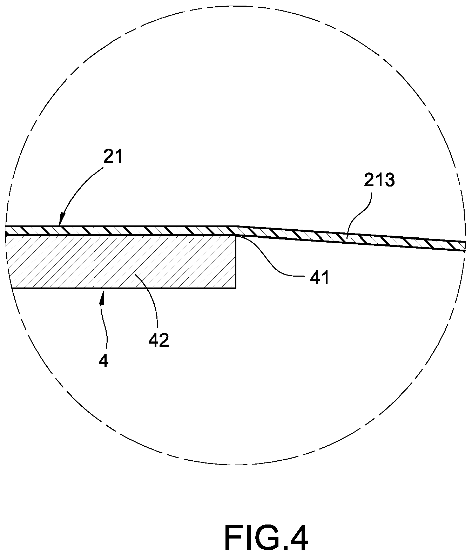

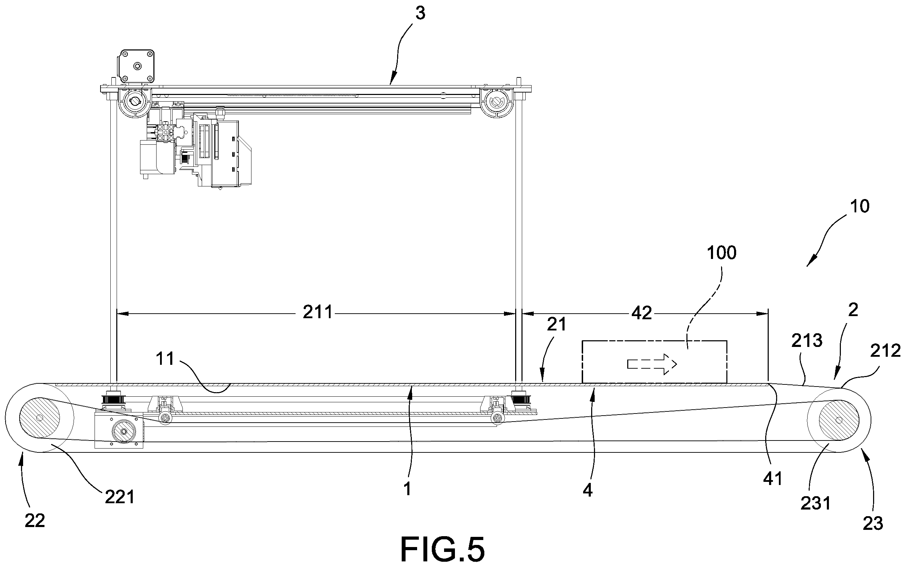

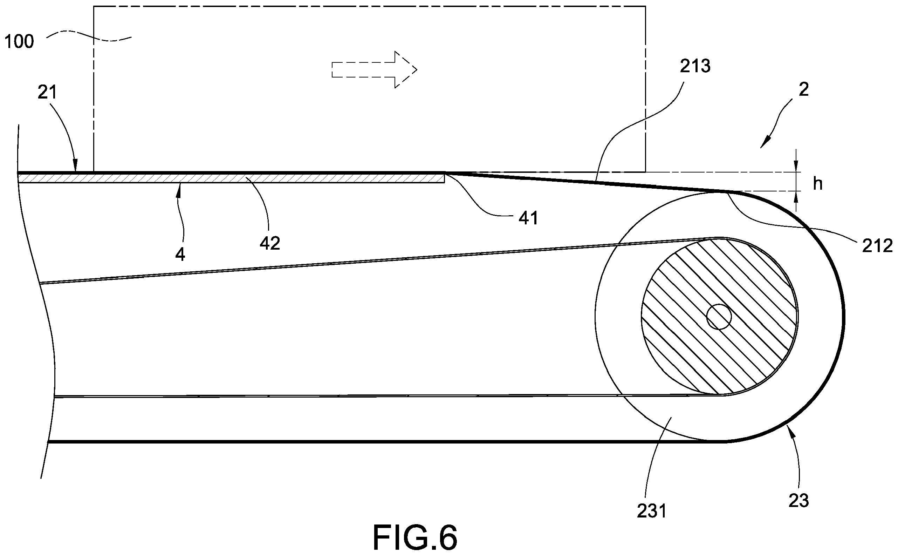

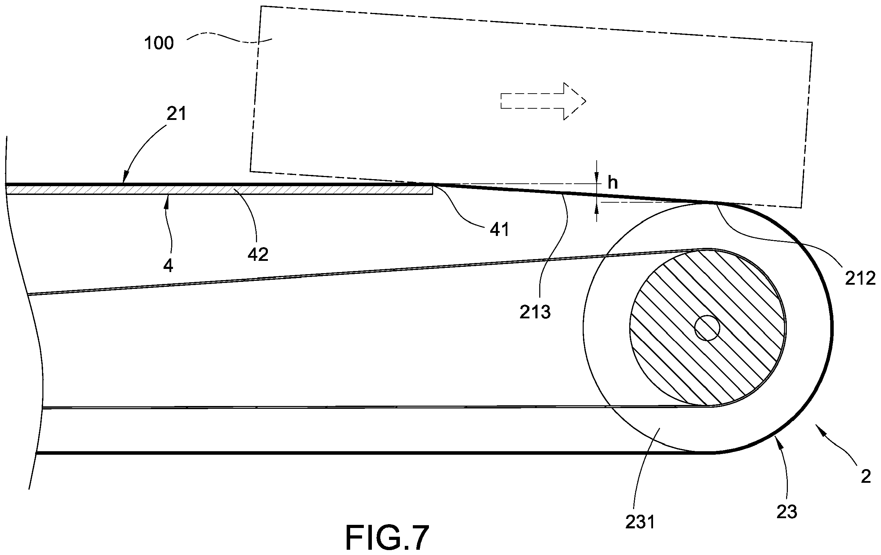

Referring to Figs. 1 to 7, the present disclosure provides a three-dimensional printing system used for printing out an object 100. The three-dimensional printing system 10 includes a support plate 1, a support plate 1, a delivery module 2, one or multiple printing devices 3, and an object detaching member 4.

As shown in Figs. 1 to 7, the support plate 1 is a hard flat plate made of metal, plastic, a ceramic material, or other suitable material. The support plate 1 has an upper surface 11.

As shown in Figs. 1 to 7, the delivery module 2 includes a belt 21 covering the support plate 1. The upper surface 11 of the support plate 1 is in contact with the belt 21. The belt 21 includes a printing area 211 above the support plate 1 and includes a separation section 212 at one side of the support plate 1.

In detail, the delivery module 2 further includes a first roller 22 and a second roller 23, the first roller 22 and the second roller 23 are disposed at two sides of the support plate 1 to drive the belt 21 to move with respect to the support plate 1, and the separation section 212 is an area of the belt 21 in contact with the second roller 23. The first roller 22 is a drive wheel 221 actively driving the belt 21, and the second roller 23 is an idler 231 passively driving the belt 21; however, the present disclosure is not limited in this regard.

As shown in Figs. 1, 2 and 5, the printing device 3 is disposed corresponding to the support plate 1, the object 100 is formed layer by layer in the printing area 211 via the printing device 3 and is moved away by the belt 21 after the object 100 is completely printed out.

As shown in Figs. 1 to 7, the object detaching member 4 is disposed under the belt 21 and between the support plate 1 and the separation section 212. The object detaching member 4 includes an abutment portion 41 abutted against the belt 21, and the abutment portion 41 is at a position higher than a position of the separation section 212 to form a height level difference h therebetween, so that the belt 21 includes an inclined section 213 between the abutment portion 41 and the separation section 212, and a height level of the inclined section 213 gradually decreases in a direction away from the abutment portion 41, and thereby the object 100 is detached from the belt 21 when the object 100 is moved to the separation section 212.

Furthermore, the object detaching member 4 is an extending plate 4 extended from one side of the support plate 1, and the abutment portion 41 is formed at one end of the extending plate 42 at one side adjacent to the separation section 212. The upper surface 11 and the abutment portion 41 are substantially on the same horizontal plane.

As shown in Fig. 1, the three-dimensional printing system 10 further includes a material collecting track 5, the material collecting track 5 is disposed corresponding to the separation section 212, and the material collecting track 5 includes an inclined surface 51 whose height level decreases in a direction away from the separation section 212. Therefore, after the object 100 is detached from the belt 21, the object 100 is collected in the material collecting track 5 via the inclined surface 51, thus achieving automatic production.

Please refer to Fig. 1 and Figs. 5 to 7 for in-use views illustrating the three-dimensional printing system 10. After the object 100 is completely printed out in the printing area 211, the object 100 adhered to the belt 21 is moved with the belt 21 to the inclined section 213. The belt 21 is horizontal before the abutment portion 41, and is inclined after the abutment portion 41 due to the height level difference h. This enables the object 100 to be gradually detached from the belt 21, so that the object 100 is separated from the belt 21 when the object 100 is moved to the separation section 212. As a result, the object 100 can be successfully collected by the material collecting track 5 to achieve automatic production. Accordingly, the need for manually operating a shovel to take down the objects is eliminated, and automatic three-dimensional printing production is achieved.

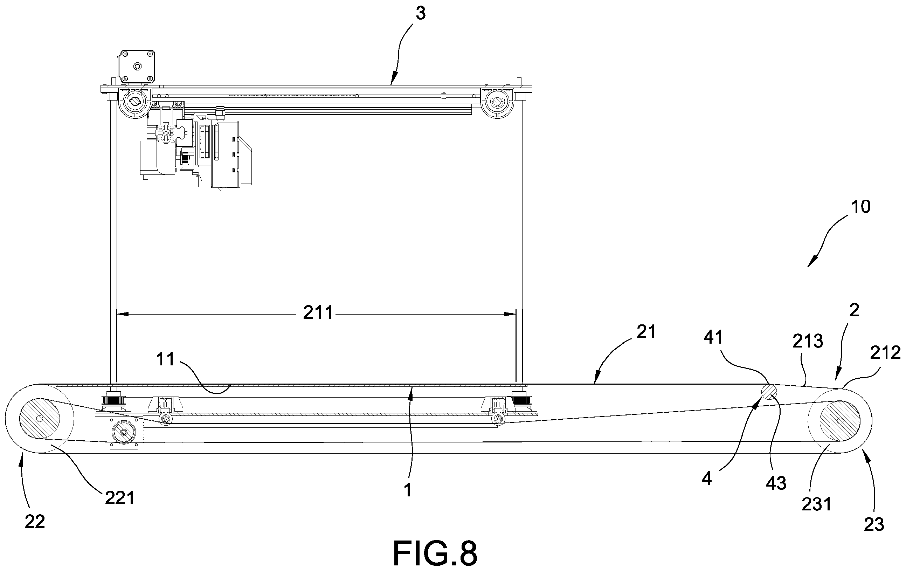

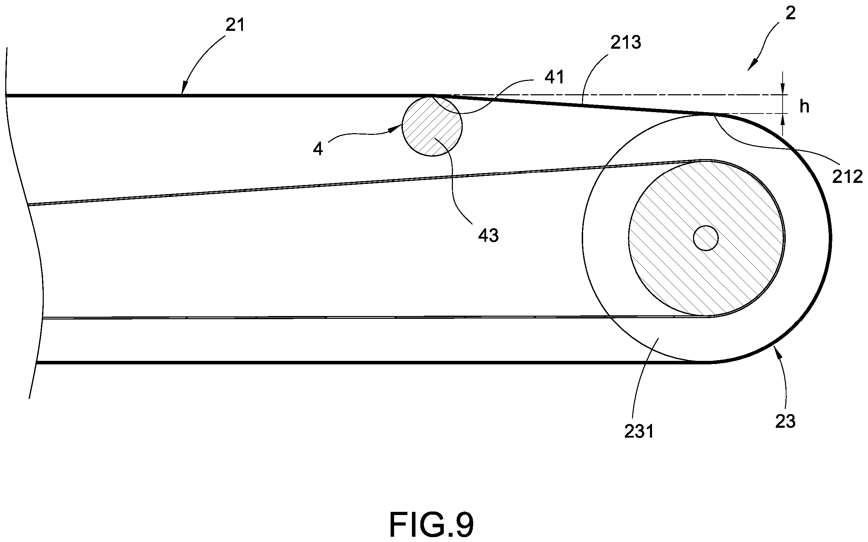

Please refer to Figs. 8 and 9 for a second not claimed embodiment of the three-dimensional printing system 10. The second embodiment is similar to the first embodiment, except that the object detaching member 4 of the second embodiment has a different structure.

In detail, the object detaching member 4 is a rod 43, an axis of the rod 43 and an axis of the second roller 23 are parallel to each other, and the abutment portion 41 is formed at the top of the rod 43. By this configuration, the belt 21 is horizontal before the abutment portion 41, and is inclined after the abutment portion 41 (i.e. the inclined section 213) due to the height level difference h. This causes the object 100 to be gradually detached from the belt 21, thereby achieving the same effect as the first embodiment.

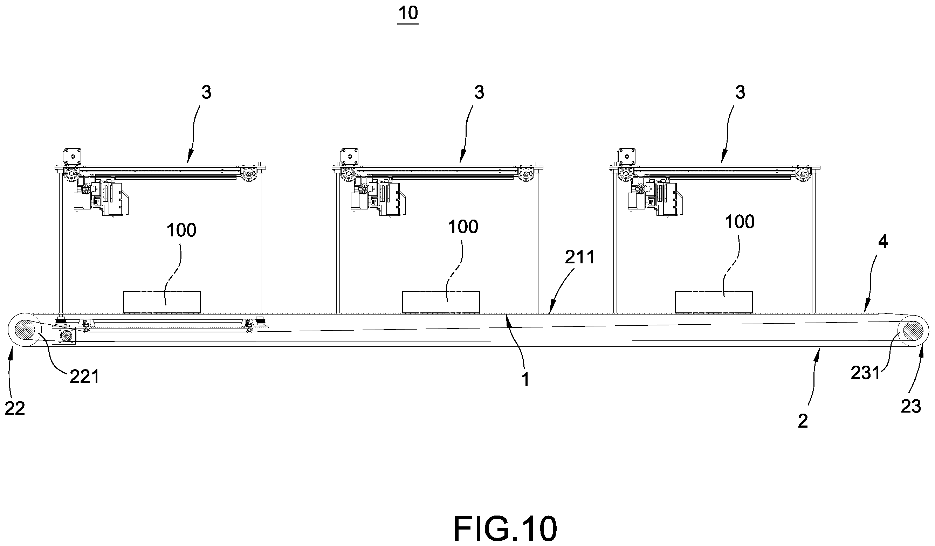

Please refer to Fig. 10 for the third embodiment of the three-dimensional printing system 10. The third embodiment is similar to the first embodiment, except that the third embodiment includes multiple printing devices 3.

Furthermore, according to a length of the printing area 211 of the delivery module 2, one or multiple printing devices 3 can be arranged, such that the multiple printing devices 3 can be arranged side by side along the support plate 1. The multiple printing devices 3 produce or color objects 100 individually. The printing devices 3 produce objects 100 respectively at the same time. After completion of printing, the objects 100 printed out are then sequentially sent to the material collecting track 5 (see Fig. 1), thereby achieving mass production and saving production time.

## Claims

1. A three-dimensional printing system, for printing out an object (100), the three-dimensional printing system (10) comprising:
a support plate (1);
a delivery module (2) including a belt (21) covering the support plate (1), the belt (21) including a printing area (211) above the support plate (1) and including a separation section (212) at one side of the support plate (1);
at least one printing device (3) disposed corresponding to the support plate (1), the object (100) being formed layer by layer in the printing area (211) via the printing device (3) and being moved with the belt (21); **characterized by** further comprising:
an object detaching member (4) disposed under the belt (21) and between the support plate (1) and the separation section (212), the object detaching member (4) including an abutment portion (41) abutted against the belt (21), the abutment portion (41) being at a position higher than a position of the separation section (212) to form a height level difference (h) between the abutment portion (41) and the separation section (212), so that the object (100) is detached from the belt (21) when the object (100) is moved to the separation section (212),
wherein the object detaching member (4) is an extending plate (42) extended from one side of the support plate (1), and the abutment portion (41) is formed at one end of the extending plate (42) at one side adjacent to the separation section (212).

2. The three-dimensional printing system according to claim 1, wherein the belt (21) including an inclined section (213) between the abutment portion (41) and the separation section (212), and a height level of the inclined section (213) gradually decreases in a direction away from the abutment portion (41).

3. The three-dimensional printing system according to claim 1, wherein the delivery module (2) further includes a first roller (22) and a second roller (23), the first roller (22) and the second roller (23) are disposed at two sides of the support plate (1) to drive the belt (21) to move with respect to the support plate (1), and the separation section (212) is an area of the belt (21) in contact with the second roller (23).

4. The three-dimensional printing system according to claim 1, wherein the support plate (1) includes an upper surface (11) in contact with the belt (21), and the upper surface (11) and the abutment portion (41) are on the same horizontal plane.

5. The three-dimensional printing system according to claim 1, wherein the three-dimensional printing system includes multiple printing devices (3), and the multiple printing devices (3) are arranged side by side along the support plate (1).

6. The three-dimensional printing system according to claim 1, further comprising a material collecting track (5), the material collecting track (5) being disposed corresponding to the separation section (212), the material collecting track (5) including an inclined surface (51) whose height level decreases in a direction away from the separation section (212).

7. The three-dimensional printing system according to claim 1, wherein the delivery module (2) further includes a first roller (22) and a second roller (23), the first roller (22) and the second roller (23) are disposed at two sides of the support plate (1) to drive the belt (21) to move with respect to the support plate (1), the separation section (212) is an area of the belt (21) in contact with the second roller (23), the first roller (22) is a drive wheel (221) actively driving the belt (21), and the second roller (23) is an idler (231) passively driving the belt (21).

## Patentansprüche

1. Dreidimensional-Druck-System zum Ausdrucken eines Objekts (100), wobei das Dreidimensional-Druck-System (10) umfasst:
eine Trägerplatte (1);
ein Ausgabemodul (2) mit einem Band (21), das die Trägerplatte (1) bedeckt, wobei das Band (21) einen Druckbereich (211) oberhalb der Trägerplatte (1) und einen Trennabschnitt (212) an einer Seite der Trägerplatte (1) aufweist;
mindestens eine Druckvorrichtung (3), die passend zu der Trägerplatte (1) angeordnet ist, wobei das Objekt (100) Schicht für Schicht in dem Druckbereich (211) mittels der Druckvorrichtung (3) gebildet wird und mit dem Band (21) bewegt wird; **dadurch gekennzeichnet, dass** es ferner umfasst:
ein Objektablöseelement (4), das unter dem Band (21) und zwischen der Trägerplatte (1) und dem Trennabschnitt (212) angeordnet ist, wobei das Objektablöseelement (4) einen Anschlagabschnitt (41) aufweist, der an das Band (21) anstößt, wobei sich der Anschlagabschnitt (41) an einer Position befindet, die höher als eine Position des Trennabschnitts (212) ist, um einen Höhenniveauunterschied (h) zwischen dem Anschlagabschnitt (41) und dem Trennabschnitt (212) zu bilden, so dass das Objekt (100) von dem Band (21) gelöst wird, wenn das Objekt (100) hin zu dem Trennabschnitt (212) bewegt wird,
wobei das Objekttrennelement (4) eine Verlängerungsplatte (42) ist, die sich von einer Seite der Trägerplatte (1) aus erstreckt, und der Anschlagabschnitt (41) an einem Ende der Verlängerungsplatte (42) an einer Seite neben dem Trennabschnitt (212) ausgebildet ist.

2. Dreidimensional-Druck-System nach Anspruch 1, wobei das Band (21) einen geneigten Abschnitt (213) zwischen dem Anschlagabschnitt (41) und dem Trennabschnitt (212) aufweist und ein Höhenniveau des geneigten Abschnitts (213) in einer Richtung weg von dem Anschlagabschnitt (41) allmählich abnimmt.

3. Dreidimensional-Druck-System nach Anspruch 1, wobei das Abgabemodul (2) ferner eine erste Walze (22) und eine zweite Walze (23) aufweist, wobei die erste Walze (22) und die zweite Walze (23) an zwei Seiten der Trägerplatte (1) angeordnet sind, um den Riemen (21) so anzutreiben, dass er sich in Bezug auf die Trägerplatte (1) bewegt, und der Trennabschnitt (212) ein Bereich des Riemens (21) in Kontakt mit der zweiten Walze (23) ist.

4. Dreidimensional-Druck-System nach Anspruch 1, wobei die Trägerplatte (1) eine obere Fläche (11) in Kontakt mit dem Riemen (21) aufweist und die obere Fläche (11) und der Anschlagabschnitt (41) auf der gleichen horizontalen Ebene liegen.

5. Dreidimensional-Druck-System nach Anspruch 1, wobei das Dreidimensional-Druck-System mehrere Druckvorrichtungen (3) umfasst und die mehreren Druckvorrichtungen (3) nebeneinander entlang der Trägerplatte (1) angeordnet sind.

6. Dreidimensional-Druck-System nach Anspruch 1, das ferner eine Materialsammelbahn (5) aufweist, wobei die Materialsammelbahn (5) passend zu dem Trennabschnitt (212) angeordnet ist, wobei die Materialsammelbahn (5) eine geneigte Oberfläche (51) aufweist, deren Höhenniveau in einer Richtung weg von dem Trennabschnitt (212) abnimmt.

7. Dreidimensional-Druck-System nach Anspruch 1, wobei das Abgabemodul (2) ferner eine erste Walze (22) und eine zweite Walze (23) aufweist, wobei die erste Walze (22) und die zweite Walze (23) an zwei Seiten der Trägerplatte (1) angeordnet sind, um das Band (21) so anzutreiben, dass es sich in Bezug auf die Trägerplatte (1) bewegt, wobei der Trennabschnitt (212) ein Bereich des Bandes (21) ist, der mit der zweiten Walze (23) in Kontakt steht, wobei die erste Walze (22) ein Antriebsrad (221) ist, das das Band (21) aktiv antreibt, und die zweite Walze (23) ein Leerlaufrad (231) ist, das das Band (21) passiv antreibt.

## Revendications

1. Un système d'impression tridimensionnel, pour imprimer un objet (100), le système d'impression tridimensionnel (10) comprenant:
une plaque de support (1);
un module de distribution (2) comprenant une courroie (21) recouvrant la plaque de support (1), la courroie (21) comprenant une zone d'impression (211) au-dessus de la plaque de support (1) et comprenant une section de séparation (212) sur un côté de la plaque de support (1);
au moins un dispositif d'impression (3) disposé en correspondance par rapport à la plaque support (1), l'objet (100) étant formé couche par couche dans la zone d'impression (211) via le dispositif d'impression (3) et étant déplacé avec la courroie (21); **caractérisé en ce qu'**il comporte en outre :
un élément de détachement d'objet (4) disposé sous la courroie (21) et entre la plaque de support (1) et la section de séparation (212), l'élément de détachement d'objet (4) comprenant une partie de butée (41) en butée contre la courroie (21), la partie de butée (41) étant à une position plus élevée qu'une position de la section de séparation (212) pour former une différence de niveau de hauteur (h) entre la partie de butée (41) et la section de séparation (212), de sorte que l'objet (100) est détaché de la courroie (21) lorsque l'objet (100) est déplacé vers la section de séparation (212),
dans lequel l'élément de détachement d'objet (4) est une plaque d'extension s'étendant d'un côté de la plaque de support (1), et la partie de butée (41) est formée à une extrémité de la plaque d'extension (42) à un côté adjacent de la section de séparation.

2. Le système d'impression tridimensionnel selon la revendication 1, dans lequel la courroie (21) comprend une section inclinée (213) entre la partie de butée (41) et la section de séparation (212), et un niveau de hauteur de la section inclinée (213) diminue progressivement dans une direction s'éloignant de la partie de butée (41).

3. Le système d'impression tridimensionnel selon la revendication 1, dans lequel le module de distribution (2) comprend en outre un premier rouleau (22) et un deuxième rouleau (23), le premier rouleau (22) et le deuxième rouleau (23) sont disposés en deux côtés de la plaque de support (1) pour entraîner en déplacement la courroie (21) par rapport à la plaque de support (1), et la section de séparation (212) est une zone de la courroie (21) en contact avec le deuxième rouleau (23).

4. Le système d'impression tridimensionnel selon la revendication 1, dans lequel la plaque de support (1) comprend une surface supérieure (11) en contact avec la courroie (21), et la surface supérieure (11) et la partie de butée (41) sont sur le même plan horizontal.

5. Le système d'impression tridimensionnel selon la revendication 1, dans lequel le système d'impression tridimensionnel comprend plusieurs dispositifs d'impression (3), et les multiples dispositifs d'impression (3) sont disposés côte à côte le long de la plaque de support (1).

6. Le système d'impression tridimensionnel selon la revendication 1, comprenant en outre une piste de collecte de matériau (5), la piste de collecte de matériau (5) étant disposée correspondant à la section de séparation (212), la piste de collecte de matériau (5) comprenant une surface inclinée. (51) dont le niveau de hauteur diminue dans une direction s'éloignant de la section de séparation (212).

7. Le système d'impression tridimensionnel selon la revendication 1, dans lequel le module de distribution (2) comprend en outre un premier rouleau (22) et un deuxième rouleau (23), le premier rouleau (22) et le deuxième rouleau (23) sont disposés en deux côtés de la plaque de support (1) pour entraîner en déplacement la courroie (21) par rapport à la plaque de support (1), la section de séparation (212) est une zone de la courroie (21) en contact avec le deuxième rouleau (23), le premier rouleau (22) est une roue d'entraînement (221) entraînant activement la courroie (21), et le deuxième rouleau (23) est un galet (231) entraînant passivement la courroie (21).
